# EUROPEAN PATENT APPLICATION

(11) **EP 4 701 144 A1**
(43) Date of publication of application: **25.02.2026**
(21) Application number: 24759038.3
(22) Date of filing: 26.06.2024
(51) Int. Cl.: H04L 41/0226, H04L 41/044, H04L 41/0816, H04L 41/00

(54) **DEVICE MANAGEMENT METHOD AND APPARATUS, AND NETWORK DEVICE AND STORAGE MEDIUM**

(71) Applicant: New H3C Technologies Co., Ltd., Hangzhou, Zhejiang 310052 (CN)
(72) Inventor: ZHANG, Siyu, Beijing 100102 (CN)
(74) Representative: IPAZ
(86) International application number: PCT/CN2024/101700
(87) International publication number: WO 2026/000250

(57) **Abstract**

A method, apparatus, network device and a storage medium for managing a device, which relate to the technical field of communications. The method comprises the following blocks: a first master device among a plurality of devices included in a control layer of an FTTR network obtains a first control instruction from a control device in the control layer, the first control instruction corresponding to a first slave device in an access layer managed by the first master device; translating the first control instruction into a second control instruction; sending the second control instruction to the first slave device. This solution can realize unified management and control of all devices in an FTTR network.

## Description

### Technical field

The present disclosure relates to the technical field of communications, in particular to a method and an apparatus for managing a device, a network device and a storage medium.

### Background

In the Fiber To The Room (FTTR) technology, a master device can manage a plurality of slave devices, and the specification of the number of slave devices managed will vary according to different manufacturers. Generally, the specification of the number of slave devices managed is about dozens. However, in a large-scale FTTR network, the number of slave devices that need to be deployed may be much larger than the specification of the number of slave devices managed by a master device. In order to meet coverage requirements of a large-scale FTTR network, the large-scale FTTR network is divided into multiple areas, and each area is respectively deployed with a master device and a plurality of slave devices managed by the master device. In this kind of networking, each area is independent of each other, and unified management and control cannot be realized.

### Summary

An objective of examples of the present disclosure is to provide a method and an apparatus for managing a device, a network device and a storage medium, to realize unified management and control of each of the devices in an FTTR network. The specific technical solutions are as follows:
In a first aspect, an example of the present disclosure provides a method for managing a device, which is applied to a first device among a plurality of devices comprised in a control layer of an FTTR network, wherein the first device is a control device, the method comprising:
generating a first control instruction corresponding to a first slave device in an access layer of the FTTR network, wherein the first slave device is managed by a first master device in the control layer;
sending the first control instruction to the first master device, so as to cause the first master device to translate the first control instruction into a second control instruction; sending the second control instruction to the first slave device.

In some examples, before generating the first control instruction, the method further comprises:
acquiring device information of the plurality of devices in the control layer;
electing a control device from the plurality of devices according to a preset election rule based on the device information of each of the devices.

In some examples, the device information comprises at least one of: a level of the device in the control layer, hardware performance, MAC address, production time, version, serial number and power-on time.

In some examples, the block of generating a first control instruction corresponding to a first slave device in an access layer of the FTTR network comprises:
displaying a user interface;
receiving configuration information of the first slave device input externally on the user interface;
generating a first control instruction comprising the configuration information.

In some examples, the block of generating a first control instruction corresponding to a first slave device in an access layer of the FTTR network comprises:
receiving event information of a terminal sent by the first master device, the terminal accessing the first slave device;
determining a configuration decision according to the event information;
generating a first control instruction comprising the configuration decision.

In some examples, the event information is an away event, and the block of determining a configuration decision according to the event information comprises:
determining a roaming strategy according to the away event, first neighbor information of the first slave device and second neighbor information of the terminal.

In some examples, the method further comprises:
when the terminal accesses a second slave device, synchronizing access information of the terminal to the second slave device via a second master device in the control layer, so that the terminal accesses the second slave device, the second slave device being managed by the second master device.

In some examples, the method further comprises:
receiving an online event of the terminal, the first neighbor information of the first slave device and the second neighbor information of the terminal reported by the first slave device via the first master device, wherein the online event carries access information of the terminal;
recording the access information of the terminal, the first neighbor information of the first slave device and the second neighbor information of the terminal reported by the first slave device;
aging the first neighbor information and the second neighbor information when a reporting duration of the first neighbor information and the second neighbor information reaches a preset duration.

In a second aspect, an example of the present disclosure provides a method for managing a device, which is applied to a first master device in a control layer of an FTTR network, the method comprising:
acquiring a first control instruction generated by a control device in the control layer, wherein the first control instruction corresponds to a first slave device in an access layer managed by the first master device;
translating the first control instruction into a second control instruction;
sending the second control instruction to the first slave device.

In some examples, the method further comprises:
receiving event information of a terminal sent by the first slave device, wherein the terminal accesses the first slave device;
sending the event information to the control device, so that the control device determines a configuration decision according to the event information; generating a first control instruction comprising the configuration decision.

In some examples, the event information comprises one or more of an away event of the terminal, an online event of the terminal, first neighbor information of the first slave device and second neighbor information of the terminal.

In some examples, the block of translating the first control instruction into a second control instruction comprises:
converting the first control instruction into a control instruction of a specified protocol, obtaining a second control instruction; or
determining an execution action corresponding to the first control instruction, generating a second control instruction indicating the execution action.

In a third aspect, an example of the present disclosure provides an apparatus for managing a device, which is applied to a first device among a plurality of devices comprised in a control layer of an FTTR network, wherein the first device is a control device, the apparatus comprising:
a generating module, to generate a first control instruction corresponding to a first slave device in an access layer of the FTTR network, wherein the first slave device is managed by a first master device in the control layer;
a sending module, to send the first control instruction to the first master device, so as to cause the first master device to translate the first control instruction into a second control instruction; send the second control instruction to the first slave device.

In some examples, the apparatus further comprises:
an acquisition module, to acquire device information of the plurality of devices in the control layer before generating the first control instruction;
an election module, to elect a control device from the plurality of devices according to a preset election rule based on the device information of each of the devices.

In some examples, the device information comprises at least one of: a level of the device in the control layer, hardware performance, MAC address, production time, version, serial number and power-on time.

In some examples, the generating module is specifically to: display a user interface; receive configuration information of the first slave device input externally on the user interface; generate a first control instruction comprising the configuration information.

In some examples, the generating module is specifically to: receive event information of a terminal sent by the first master device, the terminal accessing the first slave device; determine a configuration decision according to the event information; generate a first control instruction comprising the configuration decision.

In some examples, the event information is an away event, and the generating module is specifically to determine a roaming strategy according to the away event, first neighbor information of the first slave device and second neighbor information of the terminal.

In some examples, the sending module is further to:
when the terminal accesses a second slave device, synchronize access information of the terminal to the second slave device via a second master device in the control layer, so that the terminal accesses the second slave device, the second slave device being managed by the second master device.

In some examples, the apparatus further comprises:
a receiving module, to receive an online event of the terminal, the first neighbor information of the first slave device and the second neighbor information of the terminal reported by the first slave device via the first master device, wherein the online event carries access information of the terminal;
a recording module, to record the access information of the terminal, the first neighbor information of the first slave device and the second neighbor information of the terminal reported by the first slave device;
an aging module, to age the first neighbor information and the second neighbor information when a reporting duration of the first neighbor information and the second neighbor information reaches a preset duration.

In a fourth aspect, an example of the present disclosure provides an apparatus for managing a device, which is applied to a first master device in a control layer of an FTTR network, the apparatus comprising:
an acquisition module, to acquire a first control instruction from a control device in the control layer, wherein the first control instruction corresponds to a first slave device in an access layer managed by the first master device;
a translation module, to translate the first control instruction into a second control instruction;
a first sending module, to send the second control instruction to the first slave device.

In some examples, the apparatus further comprises:
a receiving module, to receive event information of a terminal sent by the first slave device, wherein the terminal accesses the first slave device;
a second sending module, to: send the event information to the control device, so that the control device determines a configuration decision according to the event information; generating a first control instruction comprising the configuration decision.

In some examples, the event information comprises one or more of an away event of the terminal, an online event of the terminal, first neighbor information of the first slave device and second neighbor information of the terminal.

In some examples, the translation module is specifically to:
convert the first control instruction into a control instruction of a specified protocol, to obtain a second control instruction; or
determine an execution action corresponding to the first control instruction, generating a second control instruction indicating the execution action.

In a fifth aspect, an example of the present disclosure provides a network device, comprising a processor and a machine-readable storage medium having stored therein machine-executable instructions that can be executed by the processor, wherein the machine-executable instructions cause the processor to perform any one of the methods for managing a device mentioned above.

In a sixth aspect, an example of the present disclosure provides a computer-readable storage medium having stored therein a computer program that, when executed by a processor, causes the processor to perform any one of the methods for managing a device mentioned above.

In a seventh aspect, an example of the present disclosure provides a computer program product that, when running on a computer, causes the computer to perform any one of the methods for managing a device mentioned above.

In the technical solutions provided by the examples of the present disclosure, the FTTR network is divided into a control layer and an access layer. The control layer includes a non-control device (such as a master device) and a control device. The control device generates control instructions corresponding to all slave devices managed by the master device, and sends the control instructions to corresponding slave devices via the master device. It can be seen that, in the examples of the present disclosure, the control device realizes unified management and control of all slave devices by means of each master device in the control layer.

Of course, it is not necessary to achieve all of the advantages mentioned above at the same time when implementing any product or method of the present disclosure.

### Brief Description of the Drawings

The drawings described herein are used to provide a further understanding of the present disclosure and constitute a part of the present disclosure. The illustrative embodiments of the present disclosure and their description are used to explain the present disclosure and do not constitute an undue limitation on the present disclosure.
Fig. 1 is a first schematic diagram of a networking architecture of an FTTR network;
Fig. 2 is a second schematic diagram of a networking architecture of an FTTR network;
Fig. 3 is a first schematic diagram of a system for managing a device provided by an example of the present disclosure;
Fig. 4a is a first schematic diagram of a networking architecture of an FTTR network provided by an example of the present disclosure;
Fig. 4b is a second schematic diagram of a networking architecture of an FTTR network provided by an example of the present disclosure;
Fig. 4c is a third schematic diagram of a networking architecture of an FTTR network provided by an example of the present disclosure;
Fig. 5 is a second schematic diagram of a system for managing a device provided by an example of the present disclosure;
Fig. 6a is a first schematic diagram of a user interface provided by an example of the present disclosure;
Fig. 6b is a second schematic diagram of a user interface provided by an example of the present disclosure;
Fig. 6c is a third schematic diagram of a user interface provided by an example of the present disclosure;
Fig. 7 is a first schematic flow chart of a method for managing a device provided by an example of the present disclosure;
Fig. 8 is a second schematic flow chart of a method for managing a device provided by an example of the present disclosure;
Fig. 9 is a schematic diagram of terminal roaming provided by an example of the present disclosure;
Fig. 10 is a first structural schematic diagram of an apparatus for managing a device provided by an example of the present disclosure;
Fig. 11 is a second structural schematic diagram of an apparatus for managing a device provided by an example of the present disclosure;
Fig. 12 is a third schematic diagram of a system for managing a device provided by an example of the present disclosure;
Fig. 13 is a schematic diagram of a network device provided by an example of the present disclosure.

### Detailed Description

In order to make the objectives, technical solutions and advantages of the present disclosure more clear, the present disclosure will be further described in detail with reference to the attached drawings and examples. Obviously, the described examples are only some, not all, of the examples of the present disclosure. Based on the examples in the present disclosure, all other examples acquired by those ordinary skilled in the art fall into the scope of protection of the present disclosure.

With the development of FTTR technology, FTTR household scenes have formed a sales volume of nearly 10 millions. At present, FTTR technology will further develop into the enterprise field. FTTR-B is an application for enterprise field scenes, which is mainly for large scenes such as hotels, corporate offices, commercial stores, villas, large flat floors and so on, to achieve the extension of optic fibers to each room.

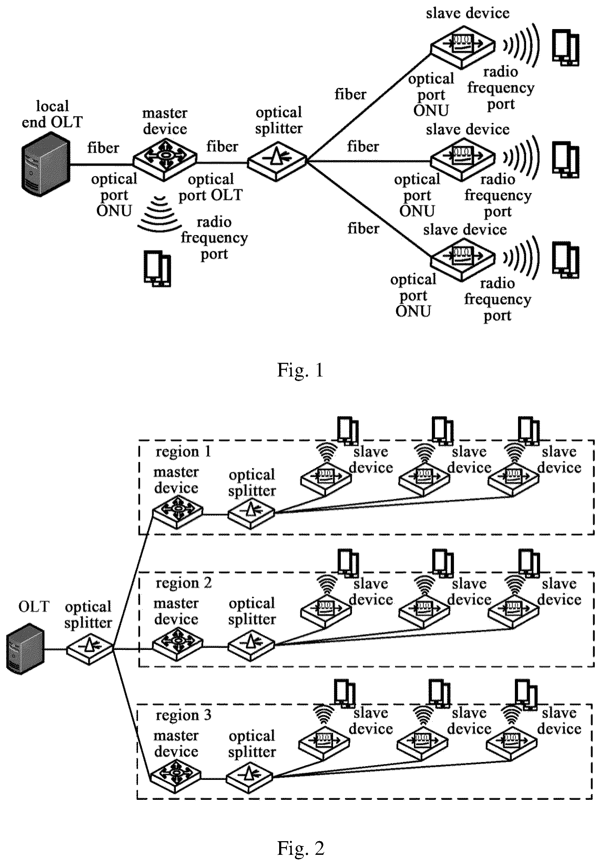

A traditional FTTR network is suitable for household scenes, a networking architecture of which is shown in Fig. 1, including a master device and a plurality of slave devices. Here, the number of slave devices is generally within 4 and not more than 32. Only three slave devices are shown in Fig. 1, which does not serve as a limitation. In the FTTR network shown in Fig. 1:
1) An uplink optical port of the master device, as an Optical Network Unit (ONU), is connected to an local end Optical Line Terminal (OLT) of an uplink network through an optic fiber, the uplink optical port being a general entrance of a local network; the master device itself can, as an OLT, be connected via a downlink optical port in combination with an optical splitter, to a plurality of slave devices through an optic fiber. In this situation, the master device and the plurality of slave devices form a Passive Optical Network (PON).
2) An uplink optical port of the slave devices, as ONU, is connected to the master device through an optic fiber. In this situation, the master device and the plurality of slave devices form a PON network.
3) The slave devices possess a radio frequency port with radio frequency capability, which enables the slave devices to provide a Wi-Fi service; the master device can also possess a radio frequency port, so that the master device provides a Wi-Fi service.

The coverage area of a traditional FTTR network is small, which cannot meet the coverage area requirements for a large-scale FTTR network. For example, in an FTTR network, 12 layers of network need to be deployed, and each layer of network includes 15~20 slave devices. In this situation, if the networking architecture of a traditional FTTR network is adopted, a master device needs to manage 12*15~12*20 (that is, 180~240) slave devices, which is far beyond the coverage area of a traditional FTTR network and far beyond the specification of number of slave devices managed by a master device. In order to meet the coverage area requirements of a large-scale FTTR network and the requirements of slave devices of a large-scale FTTR network, the FTTR network is divided into multiple regions, and each region is respectively deployed with a master device and a plurality of slave devices managed by the master device. A specific networking architecture is shown in Fig. 2. Fig. 2 only shows that the FTTR network is divided into three regions (that is, region 1~ region 3), and each region includes three slave devices, which is not a limitation. In the FTTR network shown in Fig. 2, the master device and slave devices in each region are deployed in the manner as shown in Fig. 1, and the FTTR network within a region can be referred to as a sub-FTTR network.

In the networking shown in Fig. 2, in combination with an optical splitter, the sub-FTTR networks in multiple regions are connected via the OLT of an uplink network, which realizes the coverage of a larger scene and meets the coverage area requirements of a large-scale FTTR network. However, in this networking, all regions are independent of each other, and unified management and control cannot be realized.

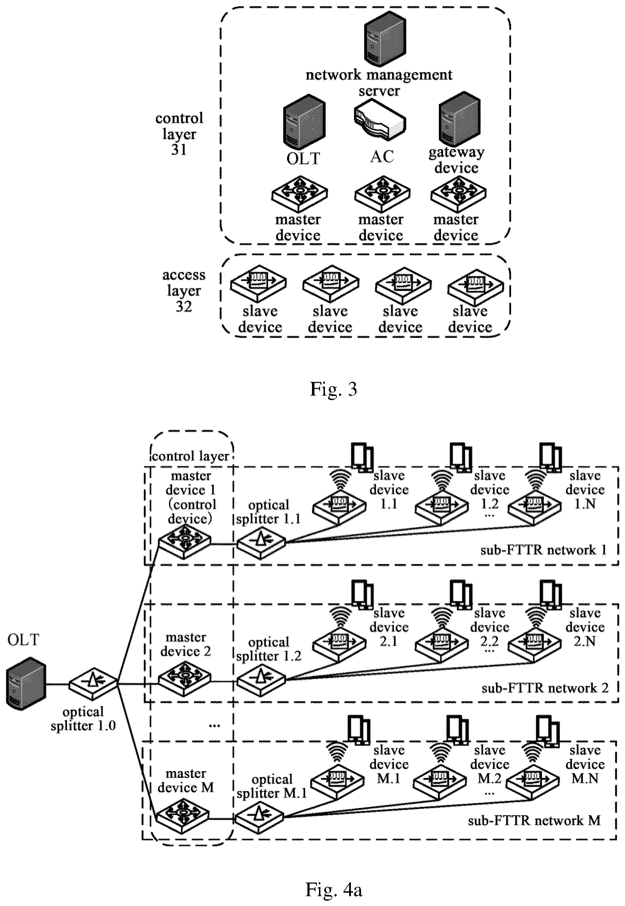

In order to realize unified management and control of all devices in an FTTR network, an example of the present disclosure provides a system for managing a device, which, as shown in Fig. 3, includes a control layer 31 and an access layer 32. The access layer 32 includes slave devices. That is, the slave devices are assigned to the access layer 32. Devices other than slave devices are assigned to the control layer 31. For example, the control layer 31 can include a master device, an OLT, an Access Controller (AC), a gateway device, a firewall device, a network management server and so on. The devices included in the control layer 31 are specifically determined according to the networking architecture of the large-scale FTTR network.

For example, a networking architecture of an FTTR network is shown in Fig. 4a. The FTTR network is of basic networking and includes sub-FTTR networks in multiple areas. That is, only each sub-FTTR network supports the technical solutions provided by examples of the present disclosure, and other devices do not support the technical solutions provided by examples of the present disclosure. In this networking, the control layer includes the master device of each sub-FTTR network, such as master device 1, master device 2, ... and master device M in Fig. 4a. The networking is suitable for users with business sensitivity and a tight budget.

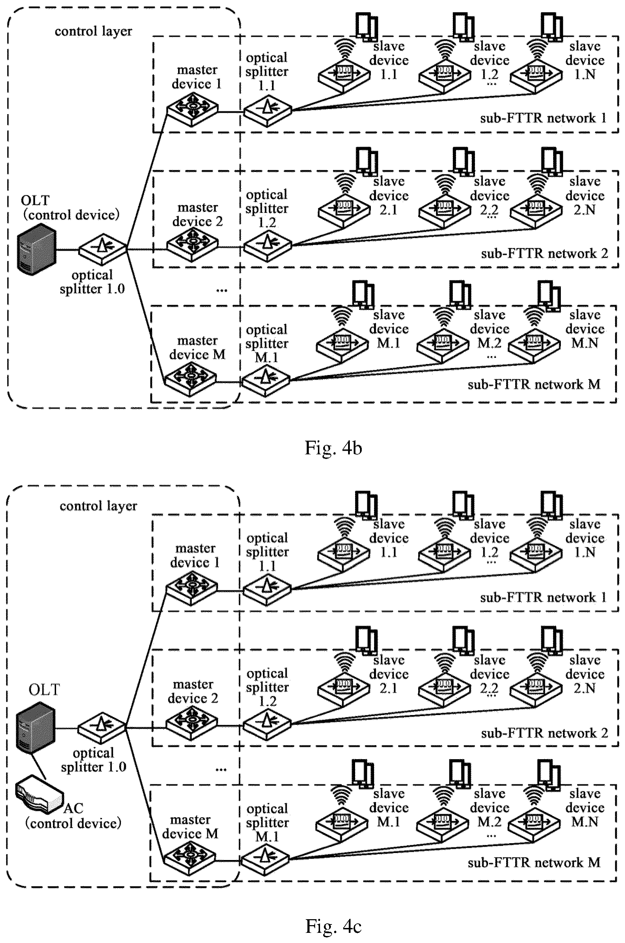

For example, a networking architecture of an FTTR network is shown in Fig. 4b. On the basis of the basic networking shown in Fig. 4a, the FTTR network is added with an OLT uplink connected by the sub-FTTR networks, and each sub-FTTR network and OLT supports the technical solutions provided by examples of the present disclosure. In this networking, the control layer includes an OLT and a master device of each sub-FTTR network, such as the OLT, as well as master device 1, master device 2, ..., and master device M in Fig. 4b. The networking is suitable for users whose budget can accept the addition of an advanced OLT.

For example, a networking architecture of an FTTR network is shown in Fig. 4c. On the basis of the networking shown in Fig. 4b, the FTTR network is added with an AC. Each sub-FTTR network, OLT and AC supports the technical solutions provided by examples of the present disclosure. In this networking, the control layer includes the AC, the OLT and the master device of each sub-FTTR network, such as the AC and the OLT, as well as master device 1, master device 2, ..., and master device M in Fig. 4c. The network is suitable for users whose budget is bigger and can accept the addition of a wireless AC and who have more requirements for advanced functions and higher operation and maintenance requirements for wireless services.

In an example of the present disclosure, the FTTR network can be added with a gateway device, a router, a firewall device, a network management server, etc. on the basis of the networking shown in Fig. 4b, which are not listed here.

In an example of the present disclosure, the control layer of an FTTR network realizes functions such as management and control of the network, and the FTTR network achieves unified control of services such as Wireless Local Area Network (WLAN) and PON and traffic of the whole network by using the computing power of devices in the control layer. Specifically, one device in the control layer serves as a control device, such as master device 1 in Fig. 4a, the OLT in Fig. 4b, and the AC in Fig. 4c; the control device in the control layer has the functions of collecting real-time network information, maintaining a device relationship topology in the control layer, managing and controlling the network, and so on, such as generating a control instruction and sending it to the master device. Then the master device sends the same to corresponding slave devices, to realize unified management and control of all slave devices.

The control device can be determined in any of the following ways:
In the first way, a device performing a control function independently is set in the FTTR network as the control device.

In the second way, the control device is a device selected from multiple devices in the control layer, and the selected device plays a role of the control device besides performing its own functions.

Multiple devices in the control layer are provided with an election rule, that is, a preset election rule. Multiple devices interact with each other by using a preset discovery protocol, so that each of the devices obtains device information of multiple devices in the control layer respectively, and according to the device information of each of the devices, a control device is elected from multiple devices in the control layer according to the preset election rule. The election rule set in each of the devices is the same, which ensures that the control device elected by each of the devices is the same.

The above-mentioned discovery protocol can be a communication protocol such as EasyMesh Protocol, Control And Provisioning of Wireless Access Points (CAPWAP) Protocol, or a proprietary protocol and so on, so long as the above-mentioned discovery protocol can achieve the effects of automatic discovery and automatic joining. There is no specific limitation on the specific type of the discovery protocol.

The above-mentioned device information can include at least one of the following: the class of the device in the control layer, hardware performance, Media Access Control (MAC) address, production time, version, serial number and power-on time, etc.

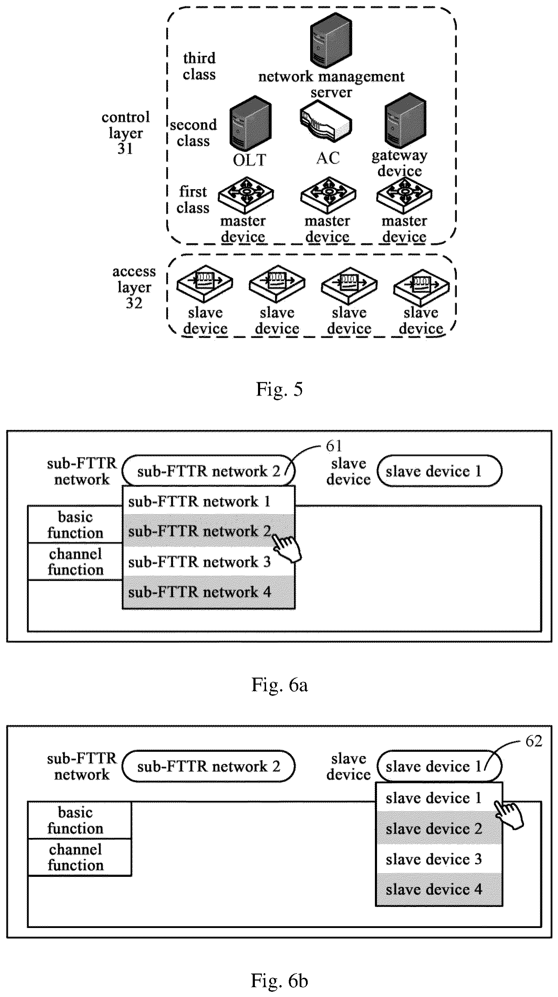

In an example of the present disclosure, in order to improve the flexibility of the control of a whole network, multiple devices in the control layer are further classified. For example, in the system for managing a device shown in Fig. 5, a master device is defined as a first class (class 1) in the control layer, the OLT, AC and gateway device are defined as a second class (class 2) in the control layer, and a network management server is a third class (class 3) in the control layer. The greater the value of the class, the higher the class, and the higher the priority of the device being elected as a control device. The specific classification method can be flexibly adjusted according to implementation situations and actual needs, and is no limited here.

The hardware performance can include memory space, CPU performance, etc. The version refers to the software version currently used by the device, such as version 1 and version 2. The serial number is an identification of the device, such as abc123456.

The preset election rule can be flexibly adjusted according to implementation situations and actual needs. For example, the order of priority of device information from high to low is: the class of the device, production time and power-on time; the preset election rule is: choosing a device with a high class, early production time and early power-on time. According to the device information of each of the devices, a device in the control layer firstly picks out a device with the highest class; when there is one device with the highest class, it is the control device; when there are multiple devices with the highest class, the device with the earliest production time is selected from the devices with the highest class; when there is one device with the earliest production time, it is the control device; when there are multiple devices with the earliest production time, the device with the earliest power-on time is selected from the devices with the earliest production time; when there is one device with the earliest power-on time, it is the control device; when there are multiple devices with the earliest power-on time, one device is randomly selected as the control device from the devices with the earliest power-on time.

In an example of the present disclosure, in order to facilitate the management of all devices in an FTTR network and improve user friendliness, the control device can provide the outside with an User Interface (UI) through a global wide area network (web), an application, a cloud platform, a network management software, a device background, etc., and the outside can input configuration information of a certain slave device (such as a first slave device) on the UI interface. The control device collects configuration information input from the outside by using the UI interface, and then generates a control instruction including the configuration information, such as a first control instruction, and sends the first control instruction to a corresponding first slave device via the master device to complete the configuration and management of the first slave device. The outside can be a user, administrator, keyboard, mouse or another device, etc., which is not limited.

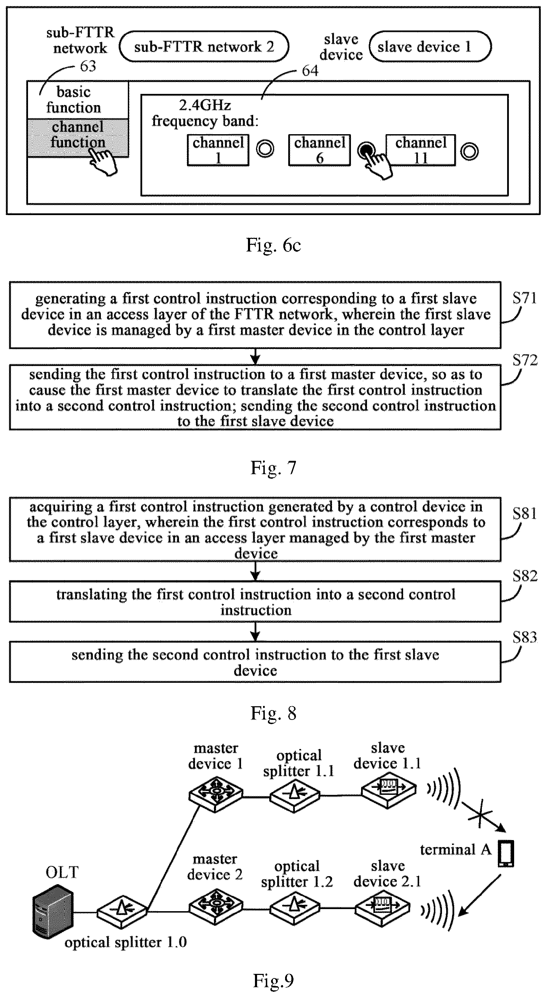

For example, the control device provides a UI interface as shown in Fig. 6a, and a user: selects a sub-FTTR network to be configured through a sub-FTTR network option 61, such as sub-FTTR network 2 in Fig. 6a; selects a slave device to be configured according to a slave device option 62, such as slave device 1 in Fig. 6b; selects a function to be configured according to a function option 63, such as the channel function in Fig. 6c; in a window 64 corresponding to the function to be configured (e.g. channel function), select specific configuration information, such as channel 6 in the three channels 1, 6, 11 of the 2.4GHz frequency band in Fig. 6c. After acquiring information of channel 6 in the 2.4GHz frequency band, the control device generates a control instruction including channel 6, and sends it to slave device 1 through the master device in sub-FTTR network 2; then, slave device 1 switches channel to channel 6.

In an example of the present disclosure, a control device can also generate a control instruction according to event information from a sub-FTTR network. For example, a first master device manages a first slave device, and a terminal accesses the first slave device. The first slave device sends event information of the terminal to the first master device; the first master device sends the event information of the terminal to the control device; then, the control device determines a configuration decision according to the event information of the terminal, and generates a first control instruction including the configuration decision.

Take a terminal roaming scenario as an example. The event information is an away event, and the configuration decision is a roaming strategy. When the terminal is moving away from the first slave device, the first slave device sends the away event of the terminal to the control device through a master device (i.e. the first master device) of the sub-FTTR network to which it belongs. Then, the control device generates a control instruction (such as the first control instruction) including the roaming strategy according to the away event, and sends the first control instruction to the corresponding first slave device through the master device, so as to complete the configuration and management of the first slave device and to realize imperceptible roaming and imperceptible authentication within/across regions of the terminal.

In an example of the present disclosure, a control device can also generate a control instruction in other ways, which are not limited.

Devices in an access layer (such as the slave devices in Fig. 3) provide wired or wireless services for user terminals, and each slave device is controlled by a master device of the sub-FTTR network in which it is located. The networking architecture shown in Figs. 4a to 4c includes sub-FTTR network 1 to sub-FTTR network M, wherein sub-FTTR network 1 includes slave devices 1.1 to 1.N, which are controlled by master device 1 of sub-FTTR network 1; sub-FTTR network 2 includes slave devices 2.1 to 2.N, which are controlled by master device 2 of sub-FTTR network 2; sub-FTTR network M includes slave devices M.1 to M.N, which are controlled by master device M of sub-FTTR network M.

In an example of the present disclosure, a slave device can obtain neighbor information (such as first neighbor information) by scanning, and a terminal obtains neighbor information (such as second neighbor information) by scanning. The terminal can report the second neighbor information to the slave device through the 802.11k protocol, and the slave device can report the first neighbor information and the second neighbor information to a control device via a master device through EasyMesh, CAPWAP or another private protocol. The control device collects real-time network information such as the first neighbor information and the second neighbor information reported from the device, and performs imperceptible roaming, imperceptible authentication or other control configurations, etc., within or across regions, on the network by using protocols such as 802.11v and 802.11r, etc. Neighbor information can include, but is not limited to, a Received Signal Strength Indication (RSSI) value, a neighbor wireless service, etc., which is not limited.

In an example of the present disclosure, a master device can also provide wired or wireless services for a user terminal. That is, the master device also has functions of a slave device. When the master device has functions of a slave device and can provide wired or wireless services, the master device can report its own first neighbor information and second neighbor information to a control device.

In the technical solutions provided by examples of the present disclosure, an FTTR network is divided into a control layer and an access layer. The control layer includes a control device and a non-control device (such as a master device). Each master device can obtain a control instruction from the control device and send it to a corresponding slave device. It can be seen that, in examples of the present disclosure, the control device realizes unified management and control of all slave devices with the help of each master device in the control layer.

In addition, in an example of the present disclosure, through the division of the control layer and the access layer, even if the specification of the number of slave devices managed by a master device is insufficient, or the specification of a single sub-FTTR network is insufficient, multiple sub-FTTR networks can be deployed to satisfy a slave device number requirement and satisfy a network coverage requirement, without the need to additionally design a large-scale master device, which reduces performance requirements of the master device and reduces the networking cost of the FTTR network.

Based on the above-mentioned system for managing a device, an example of the present disclosure provides a method for managing a device, as shown in Fig. 7, which is applied to a first device among a plurality of devices included in a control layer of an FTTR network. The first device is a control device, such as master device 1 in Fig. 4a, the OLT in Fig. 4b and the AC in Fig. 4c. The method for managing a device comprises the following blocks:
Block S71: generating a first control instruction corresponding to a first slave device in an access layer of the FTTR network, wherein the first slave device is managed by a first master device in the control layer;
Block S72: sending the first control instruction to a first master device, so as to cause the first master device to translate the first control instruction into a second control instruction; sending the second control instruction to the first slave device.

In the technical solutions provided by examples of the present disclosure, the FTTR network is divided into a control layer and an access layer. The control layer includes a non-control device (such as a master device) and a control device. The control device generates a control instruction corresponding to a slave device managed by each master device, and sends the same to a corresponding slave device via the master device. It can be seen that, in the examples of the present disclosure, the control device realizes unified management and control of all slave devices with the help of each master device in the control layer.

In the above block S71, the first master device can manage one or more slave devices, and the first slave device is any slave device managed by the first master device. When the first master device also has functions of a slave device, the first slave device can also be the first master device itself. Here, the first master device can be a control device. That is, the first master device is the first device. Alternatively, the first master device may not be a control device. That is, the first master device is not the first device.

The first slave device is a slave device that needs to be configured, and the control device (the first device) generates a control instruction (such as the first control instruction) corresponding to the first slave device.

The control device can generate the first control instruction in the following ways:
In the first way, the control device can display a UI interface through a web, Application, cloud platform, network management software, device background, etc.; receive configuration information of a first slave device input externally on the UI interface; generate a first control instruction including configuration information. Specific reference may be made to the relevant description of the corresponding section of Figs. 3 and 6a-6c.

In the second way, the control device can generate a first control instruction according to event information from a sub-FTTR network. The control device: receives event information of a terminal sent by the first master device, the terminal accessing the first slave device; according to the event information, determines a configuration decision; generates a first control instruction including the configuration decision. The event information can include, but is not limited to, one or more of an away event of the terminal, an online event of the terminal, access information of the terminal, first neighbor information of the first slave device and second neighbor information of the terminal. The event information can also include other information, which is not limited.

Take a terminal roaming scenario as an example. The event information is an away event, and the configuration decision is a roaming strategy. The control device receives the away event of the terminal sent by the first slave device via the first master device, the terminal accessing the first slave device; according to the away event, the first neighbor information of the first slave device and the second neighbor information of the terminal, a roaming strategy is determined, and a first control instruction including the roaming strategy is generated.

In this example, the first slave device can monitor a RSSI value of the terminal, and when the RSSI value of the terminal reaches a preset condition, send the away event of the terminal to the first master device. The first master device sends the away event to the control device. After receiving the away event, the control device can determine a roaming strategy, such as a destination slave device (such as a second slave device), or a non-roaming strategy, according to the first neighbor information of the first slave device and the second neighbor information of the terminal, combined with a historical roaming track of the terminal and a portrait of the terminal, and then generate a first control instruction including the roaming strategy.

In this example, the second slave device is managed by a second master device in the control layer, and the second slave device can belong to the same sub-FTTR network as the first slave device. That is, the first master device is the same as the second master device. The second slave device can also belong to a different sub-FTTR network from the first slave device. That is, the first master device is different from the second master device.

When the terminal accesses the second slave device, the control device can synchronize access information of the terminal to the second slave device via the second master device, so that the terminal can access the second slave device through imperceptible roaming and imperceptible authentication, and realize imperceptible roaming and imperceptible authentication within/across regions of the terminal. Here, the access information can include, but is not limited to, Virtual Local Area Network (VLAN), terminal MAC address, terminal IP address, Basic Service Set Identifier (BSSID) of the slave device, wireless service information, roaming track of the terminal, etc.

In some examples, in order to realize imperceptible roaming across regions, a slave device can report network information such as neighbor information in real time. For example, after a terminal accesses a first slave device, the first slave device sends an online event of the terminal to a control device through a first master device; the control device receives the online event reported by the first slave device, and the online event carries access information of the terminal; the access information of the terminal reported by the first slave device is recorded according to the online event.

In addition, the first slave device sends first neighbor information of the first slave device and second neighbor information of the terminal to the control device via the first master device. The control device: records the first neighbor information and the second neighbor information; when a reporting duration of the first neighbor information and the second neighbor information reaches a preset duration, ages the first neighbor information and the second neighbor information.

In an example of the present disclosure, the online event can carry access information of the terminal, and after receiving the online event, the control device can establish terminal information table entries corresponding to the terminal for recording the access information of the terminal. In addition, the first slave device can: periodically report the first neighbor information and the second neighbor information; and record the first neighbor information and the second neighbor information in corresponding entries. For example, the first neighbor information is recorded in a slave device information table entry corresponding to the slave device, and the second neighbor information is recorded in a terminal information table entry corresponding to the terminal. The control device maintains the terminal information table entry and the slave device information table entry. When a reporting duration of the first neighbor information and the second neighbor information reaches a preset duration, the control device ages the first neighbor information and the second neighbor information. That is, subsequently, the first neighbor information and the second neighbor information will no longer be used to determine a roaming strategy.

In the above block S72, after acquiring a first control instruction, the control device sends the first control instruction to the first master device. Then, the first master device executes subsequent processing according to the first control instruction. One can be refer to the description of Fig. 8 for details, which will not be elaborated further here.

Based on the above system for managing a device, an example of the present disclosure provides a method for managing a device, as shown in Fig. 8, which is applied to a first master device in a control layer of an FTTR network. The first master device can be any master device in the control layer, such as master device 1, master device 2,.., or master device M in Fig. 4a. The method for managing a device includes the following blocks:
Block S81: acquiring a first control instruction generated by a control device in the control layer, wherein the first control instruction corresponds to a first slave device in an access layer managed by the first master device;
Block S82: translating the first control instruction into a second control instruction;
Block S83: sending the second control instruction to the first slave device.

In the technical solutions provided by examples of the present disclosure, the FTTR network is divided into a control layer and an access layer. The control layer includes a non-control device (such as a master device) and a control device. The control device generates a control instruction corresponding to a slave device managed by each master device, and sends the same to a corresponding slave device via the master device. It can be seen that, in the examples of the present disclosure, the control device realizes unified management and control of all slave devices with the help of each master device in the control layer.

In the above block S81, the control device may or may not be the first master device. The first master device can manage one or more slave devices, and the first slave device is any slave device managed by the first master device. When the first master device also has functions of a slave device, the first slave device can also be the first master device itself.

In case 1, the first master device is a control device (such as master device 1 in Fig. 4a). In this case, the above block S81 can be: generating a first control instruction corresponding to the first slave device. For the specific process of generating the control instruction, one can refer to the above relevant description of Fig. 7, which will not be repeated here. After the control device generates the first control instruction, it is equivalent to the first master device receiving the first control instruction. In a subsequent packet transmission process between the control device and the first slave device, the control master device can be omitted and the process is simplified to be between the first master device and the first slave device.

In case 2, the first master device is not a control device (such as master device 2 in Fig. 4a). In this case, the above block S81 can be: receiving the first control instruction sent by the control device in the control layer.

Take the first control instruction being generated according to event information from a sub-FTTR network as an example. A terminal accesses a first slave device, which sends event information of the terminal to a first master device. The first master device receives the event information of the terminal sent by the first slave device; and sends the event information to the control device. The control device receives the event information of the terminal; determines a configuration decision based on the event information, generates a first control instruction including the configuration decision, and sends it to the first master device.

In case 2, the first master device is responsible for transmitting the event information from the terminal of the first slave device to the control device, that is, receiving the event information of the terminal sent by the first slave device; sending the event information to the control device. The above event information can include one or more of an away event of the terminal, an online event of the terminal, access information of the terminal reported by the first slave device, first neighbor information of the first slave device and second neighbor information of the terminal.

The first master device is also responsible for transmitting a control instruction from the control device to the first slave device. One can refer to the related descriptions of the following blocks S82 and S83 for details, which are not limited.

In the above block S82, the first master device translates the first control instruction, obtaining a second control instruction.

In an example of the present disclosure, the first slave device and the first master device communicate with each other by using a specified protocol. The communication protocol between the first slave device and the first master device and the communication protocol between the control device and the first master device can be identical or different. In order to ensure that the first slave device accurately analyzes a control instruction and realizes the control of the first slave device by the control device, the first master device converts the first control instruction into a control instruction of a specified protocol, obtaining a second control instruction.

For example, the first master device encodes a first control instruction including configuration information into a second control instruction of a specified protocol; the first master device encodes a first control instruction including a roaming strategy into a second control instruction of a specified protocol.

In order to reduce the load of a slave device, the first master device can determine an execution action corresponding to the first control instruction and generate a second control instruction indicating the execution action.

For example, in a roaming scenario, the first control instruction includes a roaming strategy. When the first master device determines to execute roaming, the first master device generates a Basic Service Set Transition Management (BTM) packet or a Deauthentication packet (Deauth packet for short) or adjusts transmission power, etc. including the roaming strategy, the BTM packet or the Deauth packet or adjusting transmission power being the second control instruction. When the first master device determines not to perform roaming, the first master device does not perform any processing, or generates a guidance packet not to perform roaming, the guidance packet being the second control instruction.

After acquiring the second control instruction, the first master device executes block S83, sending the second control instruction to the first slave device. After receiving the second control instruction, the first slave device can execute the second control instruction to realize the control of the first slave device by the control device.

For example, the second control instruction includes configuration information. The first slave device configures the first slave device according to the configuration information included in the second control instruction.

As another example, the second control instruction includes a roaming strategy. The first slave device cuts off the connection between the first slave device and the terminal according to the roaming strategy included in the second control instruction, to realize roaming of the terminal to the second slave device; or maintaining the connection between the first slave device and the terminal according to the roaming strategy included in the second control instruction, to realize that the terminal does not roam.

In an example of the present disclosure, when the terminal does not roam, the first master device may not do any processing. In this case, the first slave device will not receive the second control instruction. That is, it will not do any processing.

In some examples, the first master device can obtain device information of a plurality of devices in a control layer; elect a control device from the plurality of devices according to a preset election rule based on the device information of each of the devices. For the specific election method, one can refer to the above relevant description about Fig. 3, which will not be repeated here.

A method for managing a device provided by an example of the present disclosure will be described below in combination with the networking architecture shown in Figs. 4a to 4c. In Figs. 4a to 4c, devices in a control layer communicate with each other by using protocol 1, and the devices in the control layer communicate with devices in an access layer by using protocol 2. Description is made by taking the networking architecture shown in Fig. 4a as an example.

In the networking architecture shown in Fig. 4a, the control layer includes master devices 1 to M. Master device 1 in Fig. 4a is selected from master devices 1 to M as a control device.

Information configuration scenario:
Master device 1 provides a UI interface to the outside. A user inputs configuration information on the UI interface for one or more slave devices in an FTTR network, such as configuration information 1 for slave device 1.1 and configuration information 2 for slave device 2.1. Slave device 1.1 is managed by master device 1, and slave device 2.1 is managed by master device 2.

Master device 1: generates control instruction 11 including configuration information 1 according to protocol 1; and converts the control instruction 11 into control instruction 12 of protocol 2, and sends the control instruction 12 to slave device 1.1 via optical splitter 1.1. Slave device 1.1 parses the control instruction 12, obtaining configuration information 1, and is configured according to configuration information 1.

Master device 1 generates control instruction 21 including configuration information 2 according to protocol 1; and sends the control instruction 21 to an OLT via optical splitter 1.0. The OLT sends the control instruction 21 to master device 2 via optical splitter 1.0. Master device 2 converts the control instruction 21 into a control instruction 22 of protocol 2, and sends the control instruction 22 to the slave device 2.1 via an optical splitter 1.2. Slave device 2.1 parses the control instruction 22, obtaining configuration information 2, and is configured according to configuration information 2.

### Terminal roaming scenario:

Terminal A accesses slave device 1.1. Slave device 1.1 sends an online event 1 of terminal A to master device 1, and the online event 1 carries access information 1 of terminal A. Master device 1 establishes terminal information table entry 1 corresponding to terminal A, and records access information 1 in terminal information table entry 1.

Terminal A scans to obtain neighbor information 1 (such as the above second neighbor information) and sends it to slave device 1.1 by using the 802.11k protocol. Slave device 1.1 scans to obtain neighbor information 2 (such as the above first neighbor information), and transmits neighbor information 1 and neighbor information 2 to master device 1 via optical splitter 1.1 by using EasyMesh, CAPWAP or another private protocol. Master device 1 records neighbor information 1 in slave device information table entry 2 corresponding to slave device 1.1, records neighbor information 2 in terminal information table entry 1, and periodically ages neighbor information 1 and neighbor information 2, for example,, aging neighbor information 1 and neighbor information 2 when a reporting duration reaches a preset duration.

Based on neighbor information 2, slave device 1.1 finds that a trend that terminal A moves away from slave device 1.1 reaches a preset condition, which indicates that terminal A may need to trigger roaming, and sends away event 1 of terminal A to master device 1.1.

After receiving away event 1, master device 1.1 determines roaming strategy 1 according to access information 1, neighbor information 1 and neighbor information 2 recorded in terminal information table entry 1, such as determining that terminal A roams to access slave device 2.1, as shown in Fig. 9. Master device 1 sends roaming strategy 1 to slave device 1.1; slave device 1.1 generates BTM packet 1 corresponding to roaming strategy 1 and sends BTM packet 1 to terminal A. According to BTM packet 1, the terminal A cuts off the connection to slave device 1.1 and accesses slave device 2.1.

Master device 1 synchronizes access information 1 of terminal A to slave device 2.1, and updates a BSSID of the slave device, wireless service information, a roaming track of terminal A, etc. in terminal information table entry 1. After terminal A accesses slave device 2.1, slave device 2.1 sends online event 2 to an OLT via optical splitter 1.0, and the OLT sends online event 2 of terminal A to master device 1 via optical splitter 1.0. Imperceptible roaming of terminal A is realized.

Subsequently, terminal A scans to obtain neighbor information 1, and sends it to slave device 2.1 by adopting the 802.11k protocol. Slave device 2.1 scans to obtain neighbor information 3 (such as the above first neighbor information), and transmits neighbor information 1 and neighbor information 3 to master device 1 via optical splitter 1.2 by adopting EasyMesh, CAPWAP or other private protocols. Master device 1 records neighbor information 1 and neighbor information 3 in the table entry 1, and periodically ages neighbor information 1 and neighbor information 3.

The control solutions in the information configuration scenario and the terminal roaming scenario in the networking architecture shown in Figs. 4b and 4c are the same as those in the networking architecture shown in Fig. 4a, and only differ in that the control devices are different, which will not be described here.

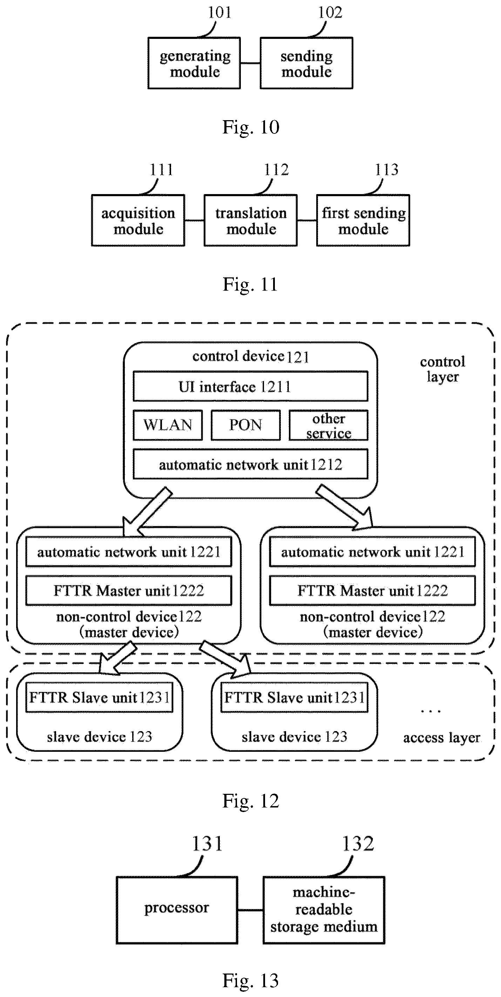

Corresponding to the above method for managing a device, an example of the present disclosure also provides an apparatus for managing a device, as shown in Fig. 10, which is applied to a first device among a plurality of devices comprised in a control layer of an FTTR network, and the first device is a control device, and the apparatus includes:
a generating module 101, to generate a first control instruction corresponding to a first slave device in an access layer of the FTTR network, wherein the first slave device is managed by a first master device in the control layer;
a sending module 102, to send the first control instruction to the first master device, so as to cause the first master device to translate the first control instruction into a second control instruction; send the second control instruction to the first slave device.

In some examples, the apparatus for managing a device may further include:
an acquisition module, to acquire device information of the plurality of devices in the control layer before generating the first control instruction;
an election module, to elect a control device from the plurality of devices according to a preset election rule based on the device information of each of the devices.

In some examples, the device information may include at least one of: a level of the device in the control layer, hardware performance, MAC address, production time, version, serial number and power-on time.

In some examples, the generating module 101 can be specifically to: display a user interface; receive configuration information of the first slave device input externally on the user interface; generate a first control instruction comprising the configuration information.

In some examples, the generating module 101 can be specifically to receive event information of a terminal sent by the first master device, the terminal accessing the first slave device; determine a configuration decision according to the event information; generate a first control instruction comprising the configuration decision.

In some examples, the event information may be an away event, and the generating module 101 can be specifically to determine a roaming strategy according to the away event, first neighbor information of the first slave device and second neighbor information of the terminal.

In some examples, the sending module 102 can be further to:
when the terminal accesses a second slave device, synchronize access information of the terminal to the second slave device via a second master device in the control layer, so that the terminal accesses the second slave device, the second slave device being managed by the second master device.

In some examples, the apparatus for managing a device may further include:
a receiving module, to receive an online event of the terminal, the first neighbor information of the first slave device and the second neighbor information of the terminal reported by the first slave device via the first master device, wherein the online event carries access information of the terminal;
a recording module, to record the access information of the terminal, the first neighbor information of the first slave device and the second neighbor information of the terminal reported by the first slave device;
an aging module, to age the first neighbor information and the second neighbor information when reporting duration of the first neighbor information and the second neighbor information reaches a preset duration.

In the examples of the present disclosure, devices capable of participating in the election may include various modules included in the first device (i.e., the control device), so that the devices capable of participating in the election can perform the functions of control devices after being elected as the control device. The devices capable of participating in the election can be AC, OLT and various master devices.

In the technical solutions provided by the examples of the present disclosure, the FTTR network is divided into a control layer and an access layer. The control layer includes a non-control device (such as a master device) and a control device. The control device generates control instructions corresponding to all slave devices managed by each master device, and sends the control instructions to corresponding slave devices via the master device. It can be seen that, in the example of the present disclosure, the control device realizes unified management and control of all slave devices by means of each master device in the control layer.

Corresponding to the above method for managing a device, an example of the present disclosure also provides an apparatus for managing a device, as shown in Fig. 11, which is applied to a first master device in a control layer of an FTTR network, and the apparatus includes:
an acquisition module 111, to acquire a first control instruction from a control device in the control layer, wherein the first control instruction corresponds to a first slave device in an access layer managed by the first master device;
a translation module 112, to translate the first control instruction into a second control instruction;
a first sending module 113, to send the second control instruction to the first slave device.

In some examples, the apparatus for managing a device may further include:
a receiving module, to receive event information of a terminal sent by the first slave device, wherein the terminal accesses the first slave device;
a second sending module, to: send the event information to the control device, so that the control device can determine a configuration decision according to the event information; generating a first control instruction comprising the configuration decision.

In some examples, the event information may include one or more of an away event of the terminal, an online event of the terminal, first neighbor information of the first slave device and second neighbor information of the terminal.

In some examples, the translation module 112 can be specifically to:
convert the first control instruction into a control instruction of a specified protocol to obtain a second control instruction; or
determine an execution action corresponding to the first control instruction, generating the second control instruction indicating the execution action.

In the technical solutions provided by the examples of the present disclosure, the FTTR network is divided into a control layer and an access layer. The control layer includes non-control device (such as a master device) and a control device. The control device generates control instructions corresponding to all slave devices managed by each master device, and sends the control instructions to the corresponding slave devices via the master device. It can be seen that, in the example of the present disclosure, the control device realizes unified management and control of all slave devices by means of each master devices in the control layer.

Corresponding to the above method for managing a device, an example of the present disclosure also provides a system for managing a device. As shown in Fig. 12, in a control layer of the system for managing a device, a control device 121 includes a UI interface 1211 and an automatic network unit 1212. In addition, the control device 121 may also include a WLAN unit, a PON unit and other service units, which are to realize corresponding services or flows.

The UI interface 1211 is used to guide users to control the WLAN unit, PON unit and other business units.

The automatic network unit 1212 is to generate a first control instruction and send the first control instruction to other devices in the control layer. For example, the automatic network unit 1212 can receive configuration information of the first slave device input externally on the user interface; generate a first control instruction including configuration information; the automatic network unit 1212 can also receive event information of a terminal sent by the first master device, the terminal accessing the first slave device; determine a configuration decision according to the event information; generate a first control instruction comprising the configuration decision.

In addition, the automatic network unit 1212 can also be used to collect real-time network information, for example, to receive an online event of the terminal, the first neighbor information of the first slave device and the second neighbor information of the terminal reported by the first slave device, wherein the online event carries access information of the terminal; record the access information of the terminal, the first neighbor information of the first slave device and the second neighbor information of the terminal reported by the first slave device; to age the first neighbor information and the second neighbor information when reporting duration of the first neighbor information and the second neighbor information reaches a preset duration.

The automatic network unit 1212 can also be used to synchronize access information of the terminal to a second slave device when the terminal accesses the second slave device, the second slave device being managed by the second master device in the control layer.

In the control layer of the system for managing a device, a non-control device 122 includes an automatic network unit 1221. The automatic network unit 1221 is to receive the control instruction (such as the first control instruction) sent by the control device, and report real-time data of itself and the sub-FTTR networks under its jurisdiction.

When the non-control device 122 is the master device, the non-control device 122 further includes an FTTR Master unit 1222. The automatic network unit 1221 is also to translate the control instruction into a control instruction of a specified protocol, and send the translated control instruction to the FTTR Master unit 1222. The FTTR Master 1222 is to send the translated control instruction to a slave unit 123.

In the access layer of the system for managing a device, the slave device 123 includes an FTTR Slave unit 1231, and the FTTR Slave unit 1231 can adopt relevant operations to process the received control instructions, which will not be described in detail here.

In the example of the present disclosure, the networking architecture of an FTTR network carries out : the division of a control layer and an access layer, the classification of a control layer, an election of a control device, and the design of modules, units and functions of various device roles, which meet the needs of groups with different functional requirements and economic strength, so that the FTTR network can provide better network services.

Corresponding to the above-mentioned method for managing a device, an example of the present disclosure also provides a network device, such as the above control device and master device, as shown in Fig. 13, including a processor 131 and a machine-readable storage medium 132, wherein the machine-readable storage medium 132 stores machine-executable instructions that can be executed by the processor 131, and the machine-executable instructions cause the processor 131 to perform any one of the methods for managing a device mentioned above.

The machine-readable storage medium may include a Random Access Memory (RAM) or a Non-Volatile Memory (NVM), such as at least one disk memory. Alternatively, the machine-readable storage medium can also be at least one storage device located away from the aforementioned processor.

The processor can be a general-purpose processor, including a Central Processing Unit (CPU), a Network Processor (NP) or the like. It can also be a Digital Signal Processor (DSP), Application Specific Integrated Circuit (ASIC), Field-Programmable Gate Array (FPGA) or other programmable logic devices, discrete gate or transistor logic devices, and discrete hardware components.

In yet another example provided by the present disclosure, a computer-readable storage medium is also provided, which has stored therein a computer program that, when executed by a processor, carries out any one of the methods for managing a device mentioned above.

In yet another example provided by the present disclosure, a computer program product containing instructions is also provided, which, when running on a computer, causes the computer to perform any one of the methods for managing a device in the above examples.

The above examples can be realized in whole or in part by software, hardware, firmware or any combination thereof. When implemented by software, it can be fully or partially implemented in the form of a computer program product. The computer program product includes one or more computer instructions. When the computer program instructions are loaded and executed on a computer, the flow or function described in the examples of the present disclosure is generated in whole or in part. The computer can be a general-purpose computer, a dedicated computer, a computer network, or other programmable devices. The computer instructions can be stored in a computer-readable storage medium or transmitted from a computer-readable storage medium to another. For example, the computer instructions can be transmitted from a website, computer, server or data center to another website, computer, server or data center in a wired (such as coaxial cable, optical fiber, digital subscriber line (DSL)) or wireless (such as infrared, wireless, microwave, or the like) way. The computer-readable storage medium can be any available medium that a computer can access or data storage device such as a server, a data center and the like that contains one or more available media or is integrated with one or more available media. The available medium may be a magnetic medium (e.g., a floppy disk, a hard disk, a magnetic tape), an optical medium (e.g., DVD), or a semiconductor medium (e.g., a Solid State Disk (SSD)) and the like.

It should be noted that in the present disclosure, relational terms such as first and second are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed or elements inherent to such process, method, article or device. Without further restrictions, an element defined by the phrase "including one" does not exclude the existence of other identical elements in the process, method, article or device including the element.

Each example in this disclosure is described in a related way, and the same and similar parts between the examples can be referred to each other, with each example focusing on the differences from other examples. Especially, regarding the examples of the method, apparatus, network device, storage medium and program product, since they are basically similar to the examples of the system for managing a device, the description thereof is relatively simple. For relevant information, reference can be made to the part of description of the examples of the system for managing a device.

The above are only the preferred examples of the present disclosure, and it is not used to limit the protection scope of the present disclosure. Any modification, equivalent replacement, improvement, or the like made within the spirit and principle of the present disclosure should be included within the scope of protection of the present disclosure.

## Claims

1. A method for managing a device, which is applied to a first device among a plurality of devices comprised in a control layer of an FTTR network, wherein the first device is a control device, the method comprising:
generating a first control instruction corresponding to a first slave device in an access layer of the FTTR network, wherein the first slave device is managed by a first master device in the control layer;
sending the first control instruction to the first master device, so as to cause the first master device to translate the first control instruction into a second control instruction; sending the second control instruction to the first slave device.

2. The method according to claim 1, wherein, before generating the first control instruction, the method further comprises:
acquiring device information of the plurality of devices in the control layer;
electing a control device from the plurality of devices according to a preset election rule based on the device information of each of the devices.

3. The method according to claim 2, wherein, the device information comprises at least one of: a level of the device in the control layer, hardware performance, MAC address, production time, version, serial number and power-on time.

4. The method according to claim 1, wherein, the operation of generating a first control instruction corresponding to a first slave device in an access layer of the FTTR network comprises:
displaying a user interface;
receiving configuration information of the first slave device input externally on the user interface;
generating a first control instruction comprising the configuration information.

5. The method according to claim 1, wherein, the operation of generating a first control instruction corresponding to a first slave device in an access layer of the FTTR network comprises:
receiving event information of a terminal sent by the first master device, the terminal accessing the first slave device;
determining a configuration decision according to the event information;
generating a first control instruction comprising the configuration decision.

6. The method according to claim 5, wherein, the event information is an away event, and the operation of determining a configuration decision according to the event information comprises:
determining a roaming strategy according to the away event, first neighbor information of the first slave device and second neighbor information of the terminal.

7. The method according to claim 6, wherein the method further comprises:
when the terminal accesses a second slave device, synchronizing access information of the terminal to the second slave device via a second master device in the control layer, so that the terminal accesses the second slave device, the second slave device being managed by the second master device.

8. The method according to claim 6 or 7, wherein, the method further comprises:
receiving an online event of the terminal, the first neighbor information of the first slave device and the second neighbor information of the terminal reported by the first slave device via the first master device, wherein the online event carries access information of the terminal;
recording the access information of the terminal, the first neighbor information of the first slave device and the second neighbor information of the terminal reported by the first slave device;
aging the first neighbor information and the second neighbor information when a reporting duration of the first neighbor information and the second neighbor information reaches a preset duration.

9. A method for managing a device, which is applied to a first master device in a control layer of an FTTR network, the method comprising:
acquiring a first control instruction generated by a control device in the control layer, wherein the first control instruction corresponds to a first slave device in an access layer managed by the first master device;
translating the first control instruction into a second control instruction;
sending the second control instruction to the first slave device.

10. The method according to claim 9, wherein, the method further comprises:
receiving event information of a terminal sent by the first slave device, the terminal accessing the first slave device;
sending the event information to the control device, so that the control device determines a configuration decision according to the event information; generating a first control instruction comprising the configuration decision.

11. The method according to claim 10, wherein, the event information comprises one or more of an away event of the terminal, an online event of the terminal, first neighbor information of the first slave device and second neighbor information of the terminal.

12. The method according to claim 9, wherein the operation of translating the first control instruction into a second control instruction comprises:
converting the first control instruction into a control instruction of a specified protocol, to obtain a second control instruction; or
determining an execution action corresponding to the first control instruction and generating a second control instruction indicating the execution action.

13. An apparatus for managing a device, which is applied to a first device among a plurality of devices comprised in a control layer of an FTTR network, wherein the first device is a control device, the apparatus comprising:
a generating module, to generate a first control instruction corresponding to a first slave device in an access layer of the FTTR network, wherein the first slave device is managed by a first master device in the control layer;
a sending module, to send the first control instruction to the first master device, so as to cause the first master device to translate the first control instruction into a second control instruction; send the second control instruction to the first slave device.

14. The apparatus according to claim 13, wherein, the apparatus further comprises:
an acquisition module, to acquire device information of the plurality of devices in the control layer before generating the first control instruction;
an election module, to elect a control device from the plurality of devices according to a preset election rule based on the device information of each of the devices.

15. The apparatus according to claim 14, wherein, the device information comprises at least one of: a level of the device in the control layer, hardware performance, MAC address, production time, version, serial number and power-on time.

16. The apparatus according to claim 13, wherein, the generating module is specifically: to display a user interface; receive configuration information of the first slave device input externally on the user interface; generate a first control instruction comprising the configuration information.

17. The apparatus according to claim 13, wherein the generating module is specifically to: receive event information of a terminal sent by the first master device, the terminal accessing the first slave device; determine a configuration decision according to the event information; generate a first control instruction comprising the configuration decision.

18. The apparatus according to claim 17, wherein the event information is an away event, and the generating module is specifically to determine a roaming strategy according to the away event, first neighbor information of the first slave device and second neighbor information of the terminal.

19. The apparatus according to claim 18, wherein, the sending module is further to:
when the terminal accesses a second slave device, synchronize access information of the terminal to the second slave device via a second master device in the control layer, so that the terminal accesses the second slave device, the second slave device being managed by the second master device.

20. The apparatus according to claim 18 or 19, wherein the device further comprises:
a receiving module, to receive an online event of the terminal, the first neighbor information of the first slave device and the second neighbor information of the terminal reported by the first slave device via the first master device, wherein the online event carries access information of the terminal;
a recording module, to record the access information of the terminal, the first neighbor information of the first slave device and the second neighbor information of the terminal reported by the first slave device;
an aging module, to age the first neighbor information and the second neighbor information when a reporting duration of the first neighbor information and the second neighbor information reaches a preset duration.

21. An apparatus for managing a device, which is applied to a first master device in a control layer of an FTTR network, the apparatus comprising:
an acquisition module, to acquire a first control instruction from a control device in the control layer, wherein the first control instruction corresponds to a first slave device in an access layer managed by the first master device;
a translation module, to translate the first control instruction into a second control instruction;
a first sending module, to send the second control instruction to the first slave device.

22. The apparatus according to claim 21, wherein, the apparatus further comprises:
a receiving module, to receive event information of a terminal sent by the first slave device, the terminal accessing the first slave device;
a second sending module, to: send the event information to the control device, so that the control device determines a configuration decision according to the event information; generating a first control instruction comprising the configuration decision.

23. The apparatus according to claim 22, wherein, the event information comprises one or more of an away event of the terminal, an online event of the terminal, first neighbor information of the first slave device and second neighbor information of the terminal.

24. The apparatus according to claim 21, wherein, the translation module is specifically to:
convert the first control instruction into a control instruction of a specified protocol, to obtain a second control instruction; or
determine an execution action corresponding to the first control instruction, generating a second control instruction indicating the execution action.

25. A network device, comprising a processor and a machine-readable storage medium having stored therein machine-executable instructions that can be executed by the processor, wherein the machine-executable instructions cause the processor to perform the method according to any one of claims 1-12.

26. A computer-readable storage medium having stored therein a computer program that, when executed by a processor, causes the processor to perform the method according to any one of claims 1-12.

27. A computer program product that, when running on a computer, causes the computer to perform the method according to any one of claims 1-12.
